(19) Europäisches Patentamt
European Patent Office
Office européen des brevets

(11) **EP 3 859 614 A1**

(12) **EUROPEAN PATENT APPLICATION**

(43) Date of publication:
**04.08.2021 Bulletin 2021/31**

(51) Int Cl.:
**G06N 20/00** (2019.01)    **G01C 21/26** (2006.01)
**B60W 40/105** (2012.01)

(21) Application number: **20155183.5**

(22) Date of filing: **03.02.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Robert Bosch GmbH**
**70442 Stuttgart (DE)**

(72) Inventors:
• **Schiegg, Martin**
  **70825 Korntal-Muenchingen (DE)**
• **Zafar, Muhammad Bilal**
  **71272 Renningen (DE)**
• **Sandmann, Kai**
  **71254 Ditzingen (DE)**

Remarks:
Amended claims in accordance with Rule 137(2) EPC.

(54) **DEVICE, METHOD AND MACHINE LEARNING SYSTEM FOR DETERMINING A VELOCITY FOR A VEHICLE**

(57)    A device, a machine learning system (200) and a method for determining a velocity (116) of a vehicle, the method comprising providing an input for a first in particular generative model (102) depending on a route information (106), a probabilistic variable (108), in particular noise, and an output of a second in particular physical model (104), determining an output of the first model (102) in response to the input for the first model (102), wherein the output of the first model (102) characterizes the velocity (116), wherein the first model (102) comprises a first component (102a) that is trained to map input for the first model (102) determined depending on the route information (106) and the probabilistic variable (108) to intermediate output (110) for the velocity of the vehicle, wherein the first model (102) comprises a second component (102b) that is trained to map the intermediate output (110) to the velocity (116) depending on the output of the second model (104), wherein the output of the second model (104) characterizes a physical constraint (112) for the velocity (116) or for the intermediate output (110).

Fig. 2

**Description**

Background

A velocity of a vehicle may be determined from measurements by either physical models or probabilistic models. While physical models are deterministic, the accuracy of the velocity determined based on a physical model depends on the observability of the relevant information. Probabilistic models, on the other hand, may model unobservable behavior. However, it is difficult to prove that the vehicle velocity predicted by the probabilistic model is physically viable.
It is desirable to determine the velocity for a vehicle reliably and accurately.

Detailed description of the invention

This is achieved by the method, the device and the machine learning system according to the independent claims.
The method comprises providing an input for a first in particular generative model depending on a route information, a probabilistic variable, in particular, noise, and an output of a second, in particular physical model, determining an output of the first model in response to the input for the first model, wherein the output of the first model characterizes the velocity, wherein the first model comprises a first component that is trained to map input for the first model determined depending on the route information and the probabilistic variable to an intermediate output, wherein the first model comprises a second component that is trained to map the intermediate output to the velocity depending on the output of the second model, wherein the output of the second model characterizes a physical constraint for the intermediate output. The first model is a generative model for the intermediate output. Intermediate output is for example the acceleration or an intermediate velocity, to be later converted to the velocity of the vehicle. Noise refers to some noise in particular sampled from a well-known noise distribution like Uniform or Normal. The first component generating the intermediate velocity or the acceleration could consist of many layers of an artificial neural network. The second model provides physical constraints for the intermediate output value such as intermediate velocity or acceleration. Therefore, the accuracy and reliability of the velocity is significantly improved.
Technically one could have a physical model that takes no input at all, and gives the output that defines that the acceleration can be no less than -100 m/s^2 and no more than 100 m/s^2. This model, is still a physically plausible model having bounds that are not very tight. Preferably, the method comprises providing an input for the second model, that is, the physical model, depending on at least one vehicle state and/or the route information, and determining the output of the second model in response to the input for the second model. Hence, the bounds may vary depending on the input.
Preferably, the physical constraint for a time step is determined depending on the velocity of the vehicle in a previous time step, a force applied to the vehicle and/or a force applied by the vehicle. These vehicle parameters provide useful information that can be used by the physical model to determine limits for the acceleration.
Preferably, the route information comprises at least one of: a geographical characteristic, in particular an absolute height or a road slope characteristic and a traffic flow characteristic, in particular a time dependent average speed of traffic, and a road characteristic, in particular a number of lanes, road type and/or road curvature, and a traffic control characteristic, in particular a speed limit characteristic a number of traffic lights, a number of traffic signs of a specific type, a number of stop signs, a number of yield signs and/or a number of pedestrian crossing signs, and a weather characteristic in particular an amount of rain at a predetermined time, a wind speed and/or a presence of fog. This information is particularly useful for predicting the velocity of the vehicle by the generative model and for training of the generative model.
Preferably, the method comprises providing an input for a third model depending on the route information and the velocity, determining an output of the third model in response to the input for the third model, wherein the output of the third model characterizes a score indicating an estimate of veracity for the velocity, wherein the third model is trained to map input for the third model determined depending on the route information and the velocity to output of the third model characterizing the score indicating the estimate of veracity for the velocity. The score may output a true or false information regarding whether the input velocity matches a real world velocity for the same route information such as speed limit and slope.
Preferably, the method comprises determining a characteristic of the velocity over time depending on a plurality of inputs for the first model and a plurality of inputs for the second model. A series of values for the velocity is determined as the characteristic of the velocity over time. This way, velocity traces of high reliability and accuracy can be determined.
Preferably, the method comprises providing the route information as a continuous or discrete first series of values over time within a time period, providing the probabilistic variable as a continuous or discrete second series of values over time within the time period, determining by the first model, in particular a first Recurrent Neural network, a continuous or discrete third series of values for the characteristic of velocity over time depending on the values of the

2

first series and the second series, and determining by the third model, in particular a second Recurrent Neural network, the score depending on the values of the first series and the third series. This means the models process the same values of the common input and therefore the reliability of the score as indicator for the accuracy is improved.

Preferably, the method comprises estimating an exhaust characteristic for a vehicle depending on the characteristic of velocity over time and/or the score. Thus, the exhaust characteristic is based on a highly reliable and accurate velocity. The score provides information whether the velocity for estimating in the exhaust characteristic is considered more or less reliable. This may improve the estimation further.

Preferably, a start velocity is determined, wherein a succeeding velocity is determined depending on the start velocity. This improves the accuracy further.

Preferably, the start velocity is either set to zero or wherein the start velocity is determined as output of a start-velocity-model, in particular an artificial neural network, trained to map the route information to the start velocity. Setting the start velocity to zero allows to start from stand still, e.g. at ignition on. The start-velocity-model improves the generated intermediate velocity and acceleration and hence the velocity output of the second model.

Preferably, the velocity is determined depending on output of the first model and the second model in response to training data defining input data for the first model and the second model, wherein the output of the third model characterizing the score indicating the estimate of veracity for the velocity is determined, and wherein at least one parameter of the first model and/or the second model and/or the third model is determined depending on the score.

Preferably, the method comprises providing input data comprising the velocity, the route information, the intermediate output and the at least one vehicle state. The intermediate output may characterize the intermediate velocity or the acceleration of the vehicle. This is particular useful data for the training.

A corresponding device is adapted to execute steps of the method.

A machine learning system comprises the first model, the second model and the third model and is adapted to perform the steps of the method.

Further advantageous aspects can be derived from the following description and the drawings. In the drawings:

Fig. 1    schematically depicts a device for determining a velocity of a vehicle,
Fig. 2    schematically depicts a machine learning system,
Fig. 3    schematically depicts steps in a method for determining the velocity.

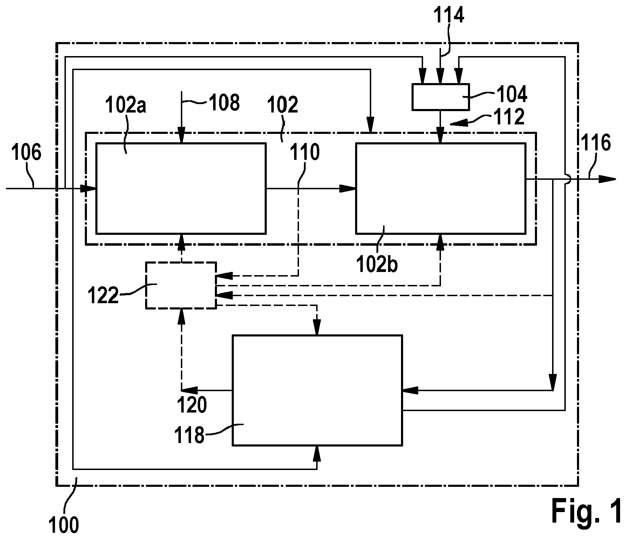

Figure 1 schematically depicts a device 100. The device 100 may comprise at least one processor and storage that may be adapted for executing models and steps of a method that will be described below.

The device 100 comprises a first in particular generative model 102 and a second in particular physical model 104.

The first model 102 is a data-based model. The first model 102 comprises a first component 102a that is adapted to map input characterizing a route information 106 and a probabilistic variable 108, in particular noise, to intermediate output 110. The intermediate output 110 may characterize an intermediate velocity for a vehicle or an acceleration for a vehicle. The intermediate output 110 is referred to as the intermediate velocity or acceleration 110 in the example below.

The route information 106 may be determined e.g. from geospatial coordinates such as global navigation satellite system data, e.g. Global Positioning System, GPS, data. The route information 106 in the example comprises map features. Map features may comprise a speed limit, and/or a topological information such as slope. The route information 106 may also comprise of weather conditions.

The second model 104 is adapted to determine output characterizing at least one physical constraint 112. The output of the second model 104 may be determined depending on at least one vehicle state 114 and/or the route information 106, in particular the speed limit and the slope.

The first model 102 is a generative model for predicting output characterizing the velocity 116. The second model 104 is a physical model for physically modelling plausible velocities. The first model 102 comprises a second component 102b that is adapted to apply the at least one physical constraint 112 to determine the velocity 116 in order to limit the velocity 116 to plausible velocities.

The device 100 is in this aspect adapted to convert the intermediate output 110, e.g. the intermediate velocity or the acceleration, of the first component 102a of the first model 102 to the velocity 116 depending on the at least one physical constraint 112. The second model 104 enriches the purely data-based generator output of the first model 102 with prior knowledge from physics. This provides a "hybrid" model as it combines a data-based model with a physics-based model.

The device 100 may comprise a third model 118. The third model 118 may be a data-based model. The third model 118 is adapted to map input characterizing the route information 106 and the velocity 116 to output characterizing a score 120 indicating an estimate of veracity for the velocity 116. The score 120 may output a true or false information regarding whether the velocity 116 represented by the output matches a real world velocity of the vehicle for the same speed limit and slope.

The device 100 may comprise a training arrangement 122 adapted to determine at least one parameter of the first model 102 and/or the second model 104 depending on the score 120. In the example, for training the first model 102 and/or the second model 104 a gradient descent method, e.g. ADAM, may be iteratively repeated based on training data for training the first model 102 and/or the second model 104 to map input characterizing the route information 106 and the probabilistic variable 108 to output the velocity 116. The third model 118 may be trained as well. Input data for the training may comprise the velocity 116, the route information 106, the intermediate output 110, e.g. the intermediate velocity or the acceleration, and/or the at least one vehicle state 114. Training in this context refers to determining parameters for either the first model 102 or the third model 118 or both alternatingly depending on the training data. Optionally, one can alter the second model 104, that is, the physical model, to include some parameters that might be trained along with the first model 102.

The device 100 in one example comprises a Generative Adversarial Network, wherein the first model 102 and the second model 104 are configured as Generator and trained and the third model 118 is configured and trained to score the realness or fakeness of a given velocity 116 as known for a Wasserstein Generative Adversarial Network. This means the third model 118 is a critic or discriminator that scores the realness or fakeness of the velocity 116 depending on the Wasserstein distance. A Jenson-Shannon divergence, in particular a regularized Jenson-Shannon divergence, may be used instead in an objective function for training the Generative Adversarial Network. Examples of regularization measures include Spectral Normalization, Gradient Penalties, Weight Clipping, and Layer Normalization could be used.

The Generative Adversarial Network is for example set up as follows:

The velocity 116 is given as a univariate time series $x_{1:T}$ of length T with $x_i \in \mathbb{R}_+$. The setup can be easily extended to cases where different time-series have different lengths. The route information 106 is given as environment conditions over time $c_{1:T}$ with $c_i \in \mathbb{R}^C$. The Generative Adversarial Network in particular a generator network g(z) learns to draw samples $x, c$ from a unknown distribution $P_{x,c}$. The probabilistic variable 108 is in the example noise $z_i \in \mathbb{R}^Z$ drawn from a known distribution, i.e. $z_i{\sim}P_z$ to form a time series of noise $z_{1:T}$. The known distribution is for example a standard Normal or Uniform distribution. A time series of the intermediate velocity or of the acceleration 110 is denoted as $\dot{x}_{1:T}$.

Given some real data $(x,c){\sim}P_{x,c}$ based on velocity x and environment conditions c the Generative Adversarial Network learns to draw samples from a distribution $Q_{x|c}$. The generator network g(z) may be trained to sample from the distribution $Q_{x|c}$ using another distribution $Q_{x,c} = Q_{x|c}P_c$ that approximates the real data distribution $P_{x,c}$. More specifically, the discrepancy $div(P_{x,c}, Q_{x,c})$ is minimized via adversarial training. The discrepancy in the example is the Wasserstein distance. The Jenson-Shannon divergence, in particular a regularized Jenson-Shannon divergence may be used instead. Given the generator network g and a critique f this corresponds to the fillowing minimax objective:

$$\min_g \max_{f \in F} V(P_{x,c}, Q_{x,c})$$

wherein the $\max\limits_{f \in F} V(.)$ means estimating the divergence, which the generator tries to minimize. The Wasserstein distance is defined for example as

$$W\left(P_{x,c}, Q_{x,c}\right) = sup_{f \in F} E_{(x,c) \sim P_{x,c}}[f(x,c)] - E_{z \sim P_z, c \sim P_c}[f(g(z,c), c)]$$

where F consists of all 1-Lipschitz functions, i.e. $F = \{f: \|f\|_L \le 1\}$.

Hence the min max objective is

$$\min_g \max_{f \in F} E_{(x,c) \sim P_{x,c}}[f(x,c)] - E_{z \sim P_z, c \sim P_c}[f(g(z,c), c)]$$

In an example a velocity trace $x_{1:T}$ is generated depending on an acceleration trace $\dot{x}_{1:T}$ that is generated by the first model 102. A velocity value $x_t$ at a time step t of the velocity trace $x_{i:T}$ is then converted to a velocity value $x_{t+1}$ of the velocity trace $x_{i:T}$ depending on an acceleration value $\dot{x}'_t$ at the time step t of the acceleration trace $\dot{x}_{1:T}$:

$$x_{t+1} \approx [\dot{x}'_t \times \Delta t] + x_t$$

where $\Delta t$ is the time difference between the two consecutive time steps.

The data-based first model 102 predicts the acceleration value at each time-step t. With a start velocity at the 0-th time step given, the acceleration values are integrated by the second model 104 over successive time-steps successively to get the velocity trace.

The start velocity is for example determined according to one of the three following possibilities:
It may be assumed that the vehicle starts from a stand-still position in which case the start velocity is zero.

An additional start-velocity-model, e.g. an artificial neural network, may be trained on start velocities a priori, e.g. with the same input route- and driver-features the Generative Adversarial Network gets. This additional start-velocity-model may be used in the generator for determining the start velocity.

In addition to this, the additional start-velocity-model may be trained within the training scheme of the Generative Adversarial Network by adjusting the parameters of the start-velocity-model in order to fool a discriminator of the Generative Adversarial Network.

Both the acceleration value or the computed velocity value may be used from the time-step t in the first model 102 to predict the velocity value for time-step t+1.

This means the velocity 116 in one time step may be determined from the velocity 116 of a previous time step.

Due to this, accelerations follow a much smaller range than the velocity and are centered around 0. This makes it easier for a neural network used as first model 102 to learn it due to low variance in magnitude, thus resulting in faster and more stable training.

Additionally, the second model 104 may determine at least one physical constraint 112 for the velocity 116 depending on at least one vehicle state 114 and/or the route information 106. The velocity 116 is determined in this aspect depending on the at least one physical constraint 112.

The second model 104 is described in further detail below.

In one aspect, the velocities to be generated are constrained depending on the at least one vehicle state 114 to values only within physically plausible ranges.

In an example, physical forces that the vehicle can apply are computed, e.g. a force applied by an engine or braking of the vehicle. In another example, forces that the vehicle faces, i.e. forces that are applied to the vehicle, are computed. In this aspect e.g. a force applied by air drag, in particular at given velocity for a given vehicle may be computed. This and other relevant relations are known from the physics/engineering literature e.g.:

Hans-Hermann Braess, Ulrich Seiffert: Vieweg Handbuch Kraftfahrzeugtechnik. 2. Auflage, Friedrich Vieweg & Sohn Verlagsgesellschaft mbH, Braunschweig/Wiesbaden, 2001

Bernd Heißing, Metin Ersoy, Stefan Gies: Fahrwerkhandbuch: Grundlagen, Fahrdynamik, Komponenten, Systeme, Mechatronik, Perspektiven. Springer Vieweg 2013

Dieter Schramm, Manfred Hiller, Roberto Bardini: Modellbildung und Simulation der Dynamik von Kraftfahrzeugen. Springer, Berlin/Heidelberg 2010

In the example, the force applied by air drag $F_{air}$ depends on: vehicle shape (in particular the vehicle front surface area A), air density $\rho_{air}$, air drag coefficient $c_w$, and the current velocity v.

In another example a roll drag force $F_{roll}$ depends on: vehicle mass $m_{vehicle}$, constant of gravitation g, rolling resistance coefficient $f_{roll}$ (which depends on the friction between the vehicle tires and the road surface), and the road slope $\alpha$.

In another example a slope drag force $F_{slope}$ depends on: vehicle mass $m_{vehicle}$, constant of gravitation g, road slope $\alpha$.

In another example a maximum brake force $F_{brake\ max}$ depends on: brake power $p_{brake}$ and velocity v.

In another example a brake friction force $F_{fr\ brake}$ depends on: vehicle mass $m_{vehicle}$, constant of gravitation g, friction coefficient $\mu_k$, slope $\alpha$.

In another example a drive engine force $F_{drive\ engine}$ depends on: maximum engine power $p_{max}$, vehicle velocity v, tension factor $r_c$. The tension factor itself depends on the current velocity and some constants that can be computed for a given vehicle.

In another example a drive friction force $F_{fr\ drive}$ depends on: vehicle mass $m_{vehicle}$, number of driving axles $n_{drive\ axles}$, total number of axles $n_{axles}$, constant of gravitation g, friction coefficient $\mu_k$, slope $\alpha$.

The variables mentioned above are for example either measured, given by a vehicle specification or a route specification or a combination thereof. The vehicle specification comprises for example the vehicle mass $m_{vehicle}$ and the front surface area A. The route specification comprises for example the slope $\alpha$. The combination of both vehicle and route specification comprises for example friction coefficients that depend on tires, road surface type and basic physics, e.g. the gravitation constant. It is also possible to estimate vehicle specific parameters from data of other in particular similar vehicles if the exact specification is unknown.

A physically plausible range of acceleration $[\underline{a}_{t+1}, \overline{a}_{t+1}]$ that is possible at time step t+1 may be computed. The physically plausible range of acceleration $[\underline{a}_{t+1}, \overline{a}_{t+1}]$ in an example is computed given the forces described above that partly depend on the velocity 116 at time step t.

The acceleration $\dot{x}_{t+1}$ at a time step t+1 hence is limited by the second model 104 to

$$\underline{a}_{t+1} \leq \dot{x}_{t+1} \leq \overline{a}_{t+1}$$

where $\underline{a}_{t+1} = c_{\min}(x_{1:t+1}, c_{1:t})$ and $\overline{a}_{t+1} = c_{\max}(x_{1:t+1}, c_{1:t})$.

The values of $c_{\min}(\cdot)$ and $c_{\max}(\cdot)$ are determined by the second model 104 as a minimum acceleration and a maximum acceleration for a given vehicle and its parameters. In an example this results in:

$$m_{vehicle} c_{\min} = \min\left(F_{\text{drive engine}}, F_{\text{fr drive}}\right) - F_{air} - F_{roll} - F_{slope}$$

$$m_{vehicle} c_{\max} = -\min\left(F_{\text{brake max}}, F_{\text{fr brake}}\right) - F_{air} - F_{roll} - F_{slope}$$

where

$$F_{air} = \frac{\rho_{\text{air}}}{2} c_w \, A \, v^2$$

$$F_{roll} = m_{vehicle} \, g \, f_{roll} \cos(\alpha)$$

$$F_{slope} = m_{vehicle} \, g \, \sin(\alpha)$$

$$F_{brake\,max} = \frac{P_{brake}}{v}$$

$$F_{fr\,brake} = m_{vehicle} \, g \, \mu_k \cos(\alpha)$$

$$F_{\text{drive engine}} = \frac{P_{max}}{v r_c}$$

$$F_{fr\,drive} = m_{vehicle} \, g \, \frac{n_{drive\,axles}}{n_{axles}} g \, \mu_k \cos(\alpha)$$

$$r_c = 1 + \frac{\lambda_{max} - 1}{10^{\frac{v}{v_{max}}}}$$

$$\lambda_{max} = 1.2$$

$$v_{max} = 100km/h$$

In this aspect, the acceleration value $\dot{x}'_{t+1}$ may be limited by the following function as physical constraint 112:

$$\dot{x}'_{t+1} = \left[\frac{1}{1 + e^{-\dot{x}_{t+1}}} \times (\overline{a}_{t+1} - \underline{a}_{t+1})\right] + \underline{a}_{t+1}.$$

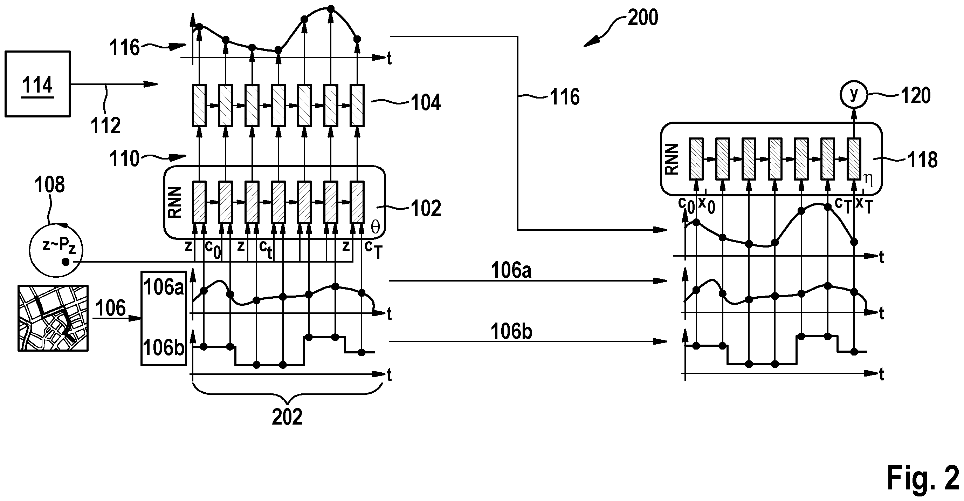

In figure 2, an exemplary machine learning system 200 for determining the velocity 116 is depicted schematically. Instead of using the sigmoid squashing function $\frac{1}{1+e^{-\dot{x}_{t+1}}}$, one could construct alternative squashing functions, e.g., one parametrized by a neural network or a hand-crafted one. Any squashing function can be used here as long as it maps the input acceleration to an output in the interval [0, 1].

In the example the route information 106 is defined by a continuous series of values over time within a time period 202. Instead of continuous series of values over time within the time period 202, the series of values may be discrete.

The route information 106 may comprise at least one of: a geographical characteristic, in particular an absolute height or a road slope characteristic 106a and a traffic flow characteristic, in particular a time dependent average speed of traffic, and a road characteristic, in particular a number of lanes, road type and/or road curvature, and a traffic control characteristic, in particular a speed limit characteristic 106b, a number of traffic lights, a number of traffic signs of a specific type, a number of stop signs, a number of yield signs and/or a number of pedestrian crossing signs, and a weather characteristic in particular an amount of rain at a predetermined time, a wind speed and/or a presence of fog. The intermediate output 11, e.g. the intermediate velocity or the acceleration, may be determined depending the route information 106 comprising route features in this aspect.

The first model 102 and the third model 104 comprise Recurrent Neural networks. The Recurrent Neural network may be implemented as a Long Short Term Memory network, a Gated recurrent unit, a Transformer architecture, or a vanilla Recurrent Neural Network. The first model 102 comprises a first component which is a Recurrent Neural network adapted to process values of the series of values of the time period 202. The values of the probabilistic variable 108 are determined in the example as noise $z \sim P_z$ sampled from an in particular standard normal or uniform distribution $P_z$. Any other distribution may be used as well. The input to the first component 102a is the noise z and an input $c_i$ for i=0, ..., T wherein T is a number of discrete values in the time period 202 that is determined depending on the route information 106. In this aspect, the noise z and the input $c_i$ may be concatenated to form the input for the first component 102a. The output of the first component 102a in response to this input is the intermediate output 110. The second component 102b is adapted to process the intermediate output 110 depending on the output of the second model 104. In the example the at least one physical constraint 112 is provided as the output the second model 104.

The third model 118 is adapted to process as input for the third model 118 values of the series of values of the time period. The third model 118 comprises a second Recurrent Neural network adapted to process values of the series of values of the time period 202. The input to the third model 118 is the input $c_i$ that is determined depending on the route information 106 and the velocity 116 indicated as $x_i$. In this aspect, the input $c_i$ and $x_i$ may be concatenated to form the input for the third model 118. This third model 118 outputs the score 120 indicating for example by y=1 the realness and by y=0 the fakeness of the velocity 116 in response to the input for the third model 118. The score is not necessarily binary. The score may be a regression value, for instance positive for true, negative for false. In the Wasserstein Generative Adversarial Network mentioned above, y is a continuous value.

The machine learning system 200 in the example is adapted to process the same value of the route information 106 in the series of values of the time period in the same cycle by both, the first model 102 and the third model 118.

The route information 106 may be defined by a continuous or discrete series of values over time within a time period 202. In the example, the probabilistic variable 108 and the velocity 116 are defined by a continuous or discrete series of values over time within the time period 202.

The time period 202 in the example may be dividable in time steps comprising values for determining the velocity 116. In the example, one velocity 116 is determined per time step.

In this aspect, the device 100 is adapted to provide the route information 106 as a continuous or discrete first series of values over time within a time period 202, to provide the probabilistic variable 108 as a continuous or discrete second series of values over time within the time period 202, determine by the first model 102, in particular the first Recurrent Neural network, a continuous or discrete third series of values for the characteristic of velocity 116 over time depending on the values of the first series and the second series, and determine by the third model 118, in particular the second Recurrent Neural network, the score 120 depending on the values of the first series and the third series.

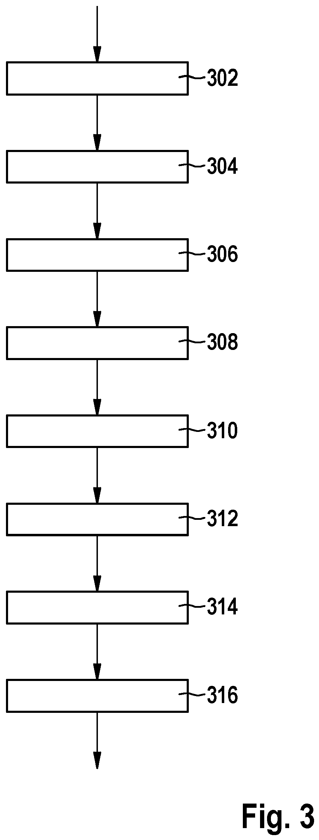

The method described below with reference to figure 3 assumes that a trained first model 102 is implemented.

The method comprises steps of an exemplary cycle for determining the velocity 116. In case the start-velocity-model is used, it is assumed that the start-velocity-model is already trained as well. In one aspect, the third model 118 may be present in particular during training. In another aspect, the start-velocity-model may be trained during training as well. The start-velocity-model may be integrated in the first model 102. However, after the training, the first model 102 and the second model 104 may be used independently from the third model 118.

The method of determining the velocity 116 comprises a step 302 of providing an input for the first model 102 depending on the route information 106 and the probabilistic variable 108. In the example, the probabilistic variable is noise, e.g. white noise. The step 302 may comprise providing an input for the start-velocity-model depending on the route information 106 and the velocity 116.

In the example, for the route information 106, the continuous first series of values over time of the road slope characteristic 106a and the speed limit characteristic 106b within the time period 202 is provided.

In the example the probabilistic variable 108 is provides as the continuous second series of values over time within the time period 202.

Afterwards, in a step 304 the velocity 116 is determined depending on the first model 102. The first component 102a produces the acceleration 110. The second component 102b produces the velocity 116 depending on the acceleration 110 and the at least one physical constraint 112. In the example, a value of the velocity 116 is determined by the function for the acceleration value $\dot{x}_{t+1}$ provided above. For generating new velocity traces, the route information 106 and the physical model information, i.e. the at least one physical constraint 112 is provided one step at a time. The generation of velocity 116 is done one step at a time. The at least one physical constraint 112 at time t and the velocity 116 at time t are used to compute the acceleration 110 at time t. This information is used to generate the velocity 116 at time t+1. The velocity 116 at the starting time t=1 may be given to be Zero.

The same procedure is applied for time t+1 to compute the velocity 116 at time t+2. This procedure is repeated to generate the velocity trace.

The intermediate velocity may be used as well instead of the acceleration as intermediate output 110. In that case the intermediate velocity may be limited to reasonable values in each procedural step.

The output of the first model 102 characterizes the velocity 116. In the example, the input for the first model 102 that is determined from the route information 106 and the probabilistic variable 108 is mapped to the output characterizing the velocity 116.

The start velocity may be determined in step 304 as well. In this aspect the velocity 116 is determined depending on the start velocity. The start velocity is determined as output of the start-velocity-model in the example. In particular the artificial neural network may map the route information 106 to the start velocity. Alternatively, the start velocity may be set to zero e.g. when stand still of the vehicle is assumed.

In one aspect, for the characteristic of velocity 116 over time the continuous third series of values is determined by the first model 102, in particular the first Recurrent Neural network, depending on the values of the first series and the second series.

The method further comprises a step 306 of providing an input for the second model 104. The input for the second model in the example is the at least one vehicle state 114 and/or the route information 106.

Afterwards in a step 308, at least one physical constraint 112 for the velocity 116 is determined depending on the at least one vehicle state 114 and/or the route information 106. In an example, the physical constraint 112 is determined depending on the velocity 116 of the vehicle of a previous cycle, a force applied to the vehicle and/or a force applied by the vehicle.

The method may comprise a step 310 of providing a input for the third model 118 depending on the route information 106 and the velocity 116. The values of the first series and the third series may be provided as input to the third model 118.

The method may comprise a step 312 of determining the score 120 indicating the estimate of veracity for the velocity 116 depending on the output of the third model 118 in response to the input for the third model 118. The output of the third model 118 characterizes the score 120. The third model 118 in this aspect is trained to map the input for the third model 118 determined depending on the route information 106 and the velocity 116 to the output characterizing the score 120.

In one aspect, the score 120 is determined by the third model 118, in particular the second Recurrent Neural network, depending on the values of the first series and the third series.

The method may comprise a step 314 of determining at least one parameter of the first model 102 or of the third model 118 or both depending on the score 120. The method may comprise determining at least one parameter of the start-velocity-model in step 316 as well.

In case the route information 106 comprises route features, in particular the road slope characteristic 106a and/or the speed limit characteristic 106b, the method may comprise extracting the route features from map information.

All the variables needed to compute these physical quantities are in the example given by a vehicle specification, e.g., vehicle mass, transmission ratios, a route specification, e.g., slope, or a combination of both vehicle and route specification, e.g. vehicle resistances. All physical formulas that are required to compute the dependencies are given by the vehicle specification and laws of physics. The second model 104 may be implemented in various ways and designed to model various of the aforementioned aspects in more or less detail. It is also possible to estimate vehicle specific parameters or dependencies from data of other in particular similar vehicles if the exact specification is unknown.

The so trained models, the device 100 and/or the machine learning system 200 may execute the method described above for predicting vehicle velocity characteristics over time.

The vehicle velocity characteristics may be used for simulation of emissions of the vehicle. This simulation may be used for a probabilistic judgment of the compliance to exhaust limits, a optimization of a parametrization of an engine of the vehicle or a control of the vehicle. The simulation may be used for predictive vehicle control, drive train management and/or torque regeneration for vehicle drive trains comprising combustion engines, electrical engines or both.

The third model 118 may not be present after the training. When the third model 118 is present after the training, the third model 118 may be used for determining or discriminating safe from unsafe values of the velocity characteristic over time. This ensures higher accuracy by the way of physical compliance and this ensures higher accuracy in downstream tasks.

Thus downstream tasks may avoid unstable and/or unsafe regimes since the physically implausible inputs might make the downstream system unstable and/or unsafe.

In a preferred embodiment, the characteristic of the velocity over time is determined depending on a plurality of inputs for the second model 104 in response to a plurality of inputs for the first model 102. In addition, an exhaust characteristic for the vehicle may be estimated depending on the characteristic of velocities over time.

**Claims**

1. A method for determining a velocity (116) of a vehicle, **characterized by** providing (302) an input for a first in particular generative model (102) depending on a route information (106), a probabilistic variable (108), in particular noise, and an output of a second in particular physical model (104), determining (304) an output of the first model (102) in response to the input for the first model (102), wherein the output of the first model (102) characterizes the velocity (116), wherein the first model (102) comprises a first component (102a) that is trained to map input for the first model (102) determined depending on the route information (106) and the probabilistic variable (108) to intermediate output (110) for the velocity of the vehicle, wherein the first model (102) comprises a second component (102b) that is trained to map the intermediate output (110) to the velocity (116) depending on the output of the second model (104), wherein the output of the second model (104) characterizes a physical constraint (112) for the velocity (116) or for the intermediate output (110).

2. The method according to claim 1, **characterized by** providing (306) an input for the second physical model (104) depending on at least one vehicle state (114) and/or the route information (106), and determining (308) the output of the second model (104) in response to the input for the second model (104).

3. The method according to claim 2, **characterized in that** the physical constraint (112) for a time step is determined depending on the velocity (116) of the vehicle in a previous time step, a force applied to the vehicle and/or a force applied by the vehicle.

4. The method according to one of the previous claims, **characterized in that** the route information (106) comprises at least one of: a geographical characteristic, in particular an absolute height or a road slope characteristic (106a) and a traffic flow characteristic, in particular a time dependent average speed of traffic, and a road characteristic, in particular a number of lanes, road type and/or road curvature, and a traffic control characteristic, in particular a speed limit characteristic (106b) a number of traffic lights, a number of traffic signs of a specific type, a number of stop signs, a number of yield signs and/or a number of pedestrian crossing signs, and a weather characteristic in particular an amount of rain at a predetermined time, a wind speed and/or a presence of fog.

5. The method according to one of the previous claims, **characterized by** providing (312) an input for a third model (118) depending on the route information (106) and the velocity (116), determining (314) an output of the third model (118) in response to the input for the third model (118), wherein the output of the third model (118) characterizes a score (120) indicating an estimate of veracity for the velocity (116), wherein the third model (118) is trained to map input for the third model (118) determined depending on the route information (106) and the velocity (116) to output of the third model (118) characterizing the score (120) indicating the estimate of veracity for the velocity (116).

6. The method according to any of the previous claims, **characterized by** determining a characteristic of the velocity (116) over time depending on a plurality of inputs for the first model (102) and a plurality of inputs for the second model (104).

7. The method according to claim 6, **characterized by** providing the route information (106) as a continuous or discrete first series of values over time within a time period (202), providing the probabilistic variable (108) as a continuous or discrete second series of values over time within the time period (202), determining by the first model (102), in particular a first Recurrent Neural network, a continuous or discrete third series of values for the characteristic of velocity (116) over time depending on the values of the first series and the second series, and determining by the third model (118), in particular a second Recurrent Neural network, the score (120) depending on the values of the first series and the third series.

8. The method according to claim 6 or 7, **characterized by** estimating an exhaust characteristic for a vehicle depending on the characteristic of velocity over time and/or the score (120).

9. The method according to any of the previous claims, **characterized in that** a start velocity is determined (304), wherein a succeeding velocity (116) is determined depending on the start velocity.

10. The method according to claim 9, wherein the start velocity is either set to zero or wherein the start velocity is determined as output of a start-velocity-model, in particular an artificial neural network, trained to map the route information (106) to the start velocity.

11. The method according to any of the previous claims, **characterized in that** the velocity (116) is determined depending on output of the first model (102) and the second model (104) in response to training data defining input data for the first model (102) and the second model (104), wherein the output of the third model (118) characterizing the score (120) indicating the estimate of veracity for the velocity (116) is determined, and wherein at least one parameter of the first model (102) and/or the second model (104) and/or the third model (118) is determined depending on the score (120).

12. The method according to claim 11, **characterized by** providing input data comprising the velocity (116), the route information (106), the intermediate output (110) and the at least one vehicle state (114).

13. A device (100) for determining a velocity (116) of a vehicle, **characterized in that** the device is adapted for executing steps of the method according to one of the claims 1 to 12.

14. A machine learning system (200) comprising a first model (102), a second model (104) and a third model (118) and adapted to perform the steps of the method according to one of the claims 1 to 12.

15. A computer program, **characterized in that** the computer program comprises computer readable instructions that when executed by a computer cause the computer to perform steps of the method according to one of the claims 1 to 12.

Amended claims in accordance with Rule 137(2) EPC.

1. A method for determining a velocity (116) of a vehicle, comprising providing (302) an input for a first in particular generative model (102) depending on a route information (106), a probabilistic variable (108), in particular noise, and an output of a second in particular physical model (104), determining (304) an output of the first model (102) in response to the input for the first model (102), wherein the output of the first model (102) characterizes the velocity (116), wherein the first model (102) comprises a first component (102a) that is trained to map input for the first model (102) determined depending on the route information (106) and the probabilistic variable (108) to intermediate output (110) for the velocity of the vehicle, wherein the first model (102) comprises a second component (102b) that is trained to map the intermediate output (110) to the velocity (116) depending on the output of the second model (104), wherein the output of the second model (104) characterizes a physical constraint (112) for the velocity (116) or for the intermediate output (110) and wherein the method further comprises providing (306) an input for the second physical model (104) depending on at least one vehicle state (114) and/or the route information (106), and determining (308) the output of the second model (104) in response to the input for the second model (104).

2. The method according to claim 1, **characterized in that** the physical constraint (112) for a time step is determined depending on the velocity (116) of the vehicle in a previous time step, a force applied to the vehicle and/or a force applied by the vehicle.

3. The method according to one of the previous claims, **characterized in that** the route information (106) comprises at least one of: a geographical characteristic, in particular an absolute height or a road slope characteristic (106a) and a traffic flow characteristic, in particular a time dependent average speed of traffic, and a road characteristic, in particular a number of lanes, road type and/or road curvature, and a traffic control characteristic, in particular a speed limit characteristic (106b) a number of traffic lights, a number of traffic signs of a specific type, a number of stop signs, a number of yield signs and/or a number of pedestrian crossing signs, and a weather characteristic in particular an amount of rain at a predetermined time, a wind speed and/or a presence of fog.

4. The method according to one of the previous claims, **characterized by** providing (312) an input for a third model (118) depending on the route information (106) and the velocity (116), determining (314) an output of the third model (118) in response to the input for the third model (118), wherein the output of the third model (118) characterizes a score (120) indicating an estimate of veracity for the velocity (116), wherein the third model (118) is trained to map input for the third model (118) determined depending on the route information (106) and the velocity (116) to output of the third model (118) characterizing the score (120) indicating the estimate of veracity for the velocity (116).

5. The method according to any of the previous claims, **characterized by** determining a characteristic of the velocity (116) over time depending on a plurality of inputs for the first model (102) and a plurality of inputs for the second model (104).

6. The method according to claim 5, **characterized by** providing the route information (106) as a continuous or discrete first series of values over time within a time period (202), providing the probabilistic variable (108) as a continuous or discrete second series of values over time within the time period (202), determining by the first model (102), in particular a first Recurrent Neural network, a continuous or discrete third series of values for the characteristic of velocity (116) over time depending on the values of the first series and the second series, and determining by the third model (118), in particular a second Recurrent Neural network, the score (120) depending on the values of the first series and the third series.

7. The method according to claim 5 or 6, **characterized by** estimating an exhaust characteristic for a vehicle depending on the characteristic of velocity over time and/or the score (120).

8. The method according to any of the previous claims, **characterized in that** a start velocity is determined (304), wherein a succeeding velocity (116) is determined depending on the start velocity.

9. The method according to claim 8, wherein the start velocity is either set to zero or wherein the start velocity is determined as output of a start-velocity-model, in particular an artificial neural network, trained to map the route information (106) to the start velocity.

10. The method according to any one of the claims 4 to 9, **characterized in that** the velocity (116) is determined depending on output of the first model (102) and the second model (104) in response to training data defining input data for the first model (102) and the second model (104), wherein the output of the third model (118) characterizing the score (120) indicating the estimate of veracity for the velocity (116) is determined, and wherein at least one parameter of the first model (102) and/or the second model (104) and/or the third model (118) is determined depending on the score (120).

11. The method according to claim 10, **characterized by** providing the input data for the training data comprising the velocity (116), the route information (106), the intermediate output (110) and the at least one vehicle state (114).

12. A device (100) for determining a velocity (116) of a vehicle, **characterized in that** the device is adapted for executing steps of the method according to one of the claims 1 to 11.

13. A machine learning system (200) comprising a first model (102), a second model (104) and a third model (118) and adapted to perform the steps of the method according to one of the claims 4 to 11.

14. A computer program, **characterized in that** the computer program comprises computer readable instructions that when executed by a computer cause the computer to perform steps of the method according to one of the claims 1 to 12.

Fig. 1

Fig. 2

Fig. 3

Europäisches
Patentamt

European
Patent Office

Office européen
des brevets

## EUROPEAN SEARCH REPORT

Application Number

EP 20 15 5183

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/364725 A1 (LONARI YASHODEEP [US]) 20 December 2018 (2018-12-20) | 1-7,9-15 | INV. G06N20/00 G01C21/26 B60W40/105 |
| Y | * paragraphs [0021], [0029], [0039] - [0046]; figures 4(a), 4(b) * | 8 | |
| Y | CN 106 650 287 A (UNIV SCIENCE & TECH CHINA) 10 May 2017 (2017-05-10) * claim 1 * | 8 | |
| A | HÜSEYIN GÖKSU: "Vehicle speed measurement by on-board acoustic signal processing", MEASUREMENT AND CONTROL., vol. 51, no. 5-6, 29 June 2018 (2018-06-29), pages 138-149, XP055717342, GB ISSN: 0020-2940, DOI: 10.1177/0020294018773777 * the whole document * | 1-15 | |

TECHNICAL FIELDS
SEARCHED       (IPC)

G06N
G01C
B60W

| | | |
|---|---|---|
| The present search report has been drawn up for all claims | | |
| Place of search | Date of completion of the search | Examiner |
| The Hague | 29 July 2020 | Pascheka, Patrick |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 20 15 5183

This annex lists the patent family members relating to the patent documents cited in the above-mentioned European search report.
The members are as contained in the European Patent Office EDP file on
The European Patent Office is in no way liable for these particulars which are merely given for the purpose of information.

29-07-2020

| Patent document cited in search report | Publication date | Patent family member(s) | Publication date |
|---|---|---|---|
| US 2018364725 A1 | 20-12-2018 | CN 109131345 A | 04-01-2019 |
| | | EP 3418996 A1 | 26-12-2018 |
| | | JP 6484361 B2 | 13-03-2019 |
| | | JP 2019001450 A | 10-01-2019 |
| | | US 2018364725 A1 | 20-12-2018 |
| CN 106650287 A | 10-05-2017 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HANS-HERMANN BRAESS ; ULRICH SEIFFERT.** Vieweg Handbuch Kraftfahrzeugtechnik. Sohn Verlagsgesellschaft mbH, 2001
- **BERND HEIßING ; METIN ERSOY ; STEFAN GIES.** Fahrwerkhandbuch: Grundlagen, Fahrdynamik, Komponenten, Systeme, Mechatronik, Perspektiven. Springer Vieweg, 2013

- **DIETER SCHRAMM ; MANFRED HILLER ; ROBERTO BARDINI.** Modellbildung und Simulation der Dynamik von Kraftfahrzeugen. Springer, 2010